# EUROPEAN PATENT SPECIFICATION

(11) **EP 1 610 070 B1**
(45) Date of publication and mention of the grant of the patent: **19.06.2013**
(21) Application number: 04723381.2
(22) Date of filing: 25.03.2004
(51) Int. Cl.: F24F 3/06, F24F 11/00, F25B 13/00, F25B 49/02

(54) **AIR CONDITIONER**
KLIMAANLAGE
CONDITIONNEUR D'AIR

(30) Priority: 28.03.2003 JP 2003092461
(43) Date of publication of application: 28.12.2005
(73) Proprietor: Toshiba Carrier Corporation, Tokyo 105-8001 (JP)
(72) Inventor: CHUMA, Yoshihiro Fuji Operation Center, Fuji-shi Sizuoka-ken 416-8521 (JP); Yamane, Hiromasa Fuji Operation Center, Fuji-shi Sizuoka-ken 416-8521 (JP); Ueno, Kiyotaka Fuji Operation Center, Fuji-shi Sizuoka-ken 416-8521 (JP); Yamamoto, Thoshihiro Fuji Operation Center, Fuji-shi Sizuoka-ken 416-8521 (JP)
(74) Representative: Maury, Richard Philip
(86) International application number: PCT/JP2004/004207
(87) International publication number: WO 2004/088212

(56) References cited:
- JP-A- 8 200 853
- JP-A- 10 300 292
- JP-A- 2001 330 291
- JP-A- 2002 071 187
- JP-A- 2002 181 370

## Description

### Technical Field

The present invention relates to an air conditioner having a plurality of outdoor units.

### Background Art

Conventionally, there is a multi-type air conditioner having a plurality of outdoor units which are connected to one another in parallel and in which compressors and heat exchangers are incorporated.

If the plurality of outdoor units are connected in parallel to each other, each outdoor unit can be designed to be compact while increasing the capability of the air conditioner. Thus, transfer efficiency is excellent. If the plurality of outdoor units have different horsepower (capability) from one another, there is a merit that the capability as the air conditioner can be freely set.

There is an example in which a capability-variable-type having a variable-speed compressor is employed for one of the plurality of outdoor units, and a constant-speed type having a constant speed compressor is employed for the remaining outdoor units (e.g., Jpn. Pat. Appln. KOKAI Publication No. 2002-181370).

There is also an example in which a plurality of outdoor units each having a capability control mechanism are employed, and any one of the outdoor units is set to a parent unit, and the capability of only the parent unit is controlled (e.g., Jpn. Pat. Appln. KOKAI Publication No. 10-232043).

In the case of an air conditioner which has a refrigerating cycle in which a plurality of outdoor units are connected in parallel to one another and the air conditioner has a refrigerating cycle in which R410A refrigerant is accommodated, since the pressure of R410A refrigerant is high, a heat exchanger is provided with a condensation temperature sensor, a detected temperature of the condensation temperature sensor and a preset value are compared with each other, thereby controlling a higher pressure side of the refrigerating cycle (e.g., Jpn. Pat. Appln. KOKAI Publication No. 2002-162126).

In the case of an air conditioner which employs the capability-variable-type outdoor units and the constant speed type outdoor units, in order to prevent abnormal rise of high-pressure-side pressure of the refrigerating cycle at the time of start, it is necessary to once lower the capability of the compressor in the capability-variable-type outdoor unit at the time of start. Thus, there is a problem that the air conditioning capability at the time of start is deteriorated.

Further, in the case of an air conditioner which employs the capability-variable-type outdoor units and the constant-speed-type outdoor units, if a cooling operation is carried out when the outside temperature is high, high-pressure-side pressure of the refrigerating cycle abruptly rises in some cases when the compressor of the constant speed type outdoor unit is started. Thus, there is a problem that protecting means of high-pressure-side pressure is operated and the operation of the air conditioner is stopped.

Further, in the case of a domestic or business type air conditioner having small capability, in order to save energy, R410A refrigerant having higher coefficient of performance than that of R407C refrigerant in some cases.

The R410A refrigerant has characteristics that pressure is about 1.5 times higher than the R407C refrigerant. When the R410A refrigerant is newly used for a multi-type air conditioner having great capability which is installed in a building, if an existing refrigerant pipe for R407C refrigerant is used as it is, there is a problem that the pressure of the refrigerant exceeds a pressure resistant reference value of the refrigerant pipe depending upon an operating state.

To avoid such problems, it is necessary to lower the design pressure of the refrigerating cycle by lowering operation point of protecting control against the rise of high-pressure-side pressure. The protecting control against the rise of high-pressure-side pressure means a control for stopping the operation of the compressor to protect the refrigerating cycle when the high-pressure-side pressure of the refrigerating cycle abnormally rises. However, if the operation point of the protecting control against the rise of high-pressure-side pressure is reduced, the compressor is frequently stopped. In this case, required air conditioning capability cannot be obtained.

Jpn. Pat. Appln. KOKAI Publication No. 8-200853 discloses a refrigerator comprising a plurality of outdoor units. The first outdoor unit comprises a variable capacitance upstream compressor and a fixed capacitance downstream compressor. The second outdoor unit of this publication comprises a fixed capacitance upstream compressor and a fixed capacitance downstream compressor. The third outdoor unit also comprises a fixed capacitance downstream compressor.

Jpn. Pat. Appln. KOKAI Publication No. 2001-30291 discloses compressors respectively driven by gas engines.

The present invention is the air conditioner of claim 1, In which a difference in capability when the number of compressors to be operated of the outdoor units of the air conditioner is to be increased and decreased, R410A refrigerant is employed and when it becomes necessary to reduce the design pressure of a refrigerating cycle, the compressor is prevented from being stopped frequently so that sufficient air conditioning capability can be obtained.

### Brief Description of Drawings

FIG. 1 is a diagram showing a structure of an embodiment.
FIG. 2 is a block diagram showing an essential portion of a control circuit of the embodiment.
FIG. 3 is a flowchart used for explaining operation of the embodiment.
FIG. 4 is a diagram showing an example of capability control of the embodiment.
FIG. 5 is a diagram showing another example of capability control of the embodiment.
FIG. 6 is a diagram showing design pressure and saturation temperature of refrigerant of the embodiment.

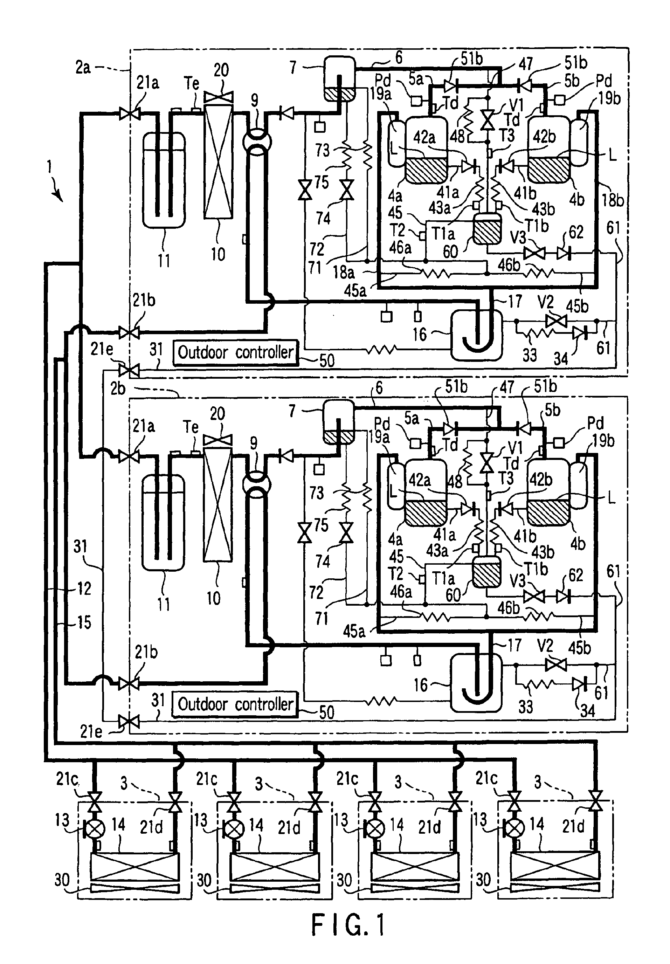

An embodiment of the present invention will be explained with reference to FIG. 1.

A reference numeral 1 represents a refrigerating cycle of an air conditioner. The refrigerating cycle 1 comprises a plurality of outdoor units 2a and 2b and a plurality of indoor units 3. In the refrigerating cycle 1, R410A refrigerant having high coefficient of performance is accommodated.

The outdoor unit 2a comprises a capability-variable-type (variable-speed-type) compressors 4a and 4b, an oil separator 7, a four-way valve 9, an outdoor heat exchanger 10, a liquid tank 11, an accumulator 16, an outdoor fan 20 and an outdoor controller 50. The outdoor unit 2b also has the same structure.

Each of the indoor units 3 comprises an electronic expansion valve 13, an indoor heat exchanger 14, an indoor fan 30 and an indoor controller (not shown). The outdoor units 2a and 2b and indoor units 3 are connected to each other through a liquid-side pipe 12 and a gas-side pipe 15.

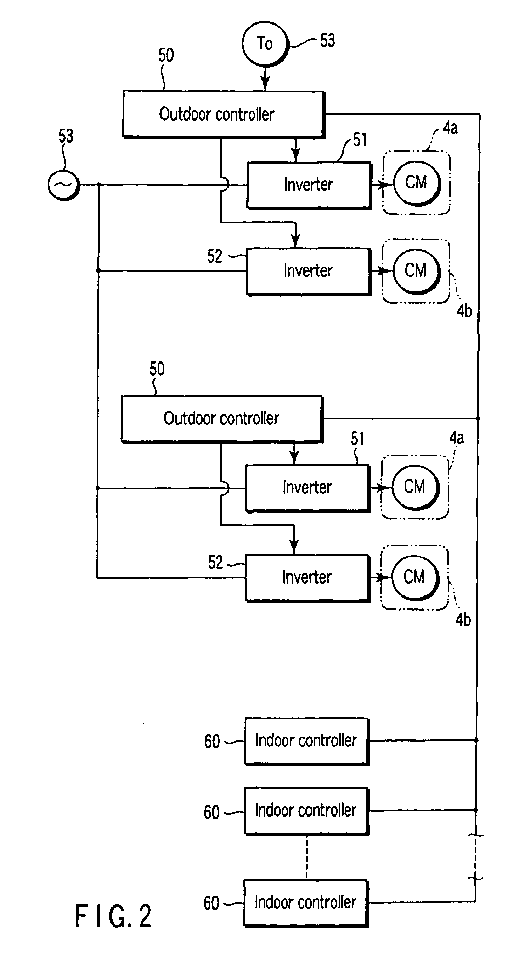

The outdoor controllers 50 of the outdoor units 2a and 2b control the operation of the respective outdoor units, and control the driving of inverters 51 and 52 shown in FIG. 2. The inverters 51 and 52 rectify voltage of a commercial alternator 53, converts DC voltage after rectification into AC voltage of frequency corresponding to a command of the outdoor controller 50 and output the same, respectively. With this output, motors CM of the compressors 4a and 4b are driven, respectively.

An outside air temperature sensor 53 for detecting outside air temperature is connected to at least one of the outdoor controllers 50.

### (Explanation of piping around compressors)

The compressors 4a and 4b are rotary compressors of high pressure type for example in which pressure in their hermetical cases become high during the operation, and lubricating oil L is accommodated in each the hermetical case. Discharge pipes 5a and 5b are connected to refrigerant discharge openings of the compressors 4a and 4b, respectively, and the discharge pipes 5a and 5b are connected to a high-pressure-side pipe 6. The discharge pipes 5a and 5b are provided with check valves 51a and 51b, respectively. Suction pipes 18a and 18b are connected to the refrigerant suction openings of the compressors 4a and 4b. The suction pipes 18a and 18b are connected to a low pressure side pipe 17. Suction cups 19a and 19b are connected to the suction pipes 18a and 18b, respectively.

A pressure sensor Pd for detecting refrigerant pressure and a temperature sensor Td for detecting refrigerant temperature are mounted on the discharge pipes 5a and 5b.

### (Explanation around oil-uniformizing circuit)

One ends of first oil-uniformizing pipes 41a and 41b are connected to side surfaces of the hermetical cases of the compressors 4a and 4b at predetermined height positions thereof. The first oil-uniformizing pipes 41a and 41b are provided with check valves 42a and 42b and first pressure reducing units, e.g., capillary tubes 43a and 43b. The capillary tubes 43a and 43b are provided at their downstream sides with first temperature sensors T1a and T1b. The other ends of the oil-uniformizing pipes 41a and 41b are collectively connected to an oil tank 60 which is a gas/liquid separator. One end of an oil-uniformizing pipe 45 is connected to a side surface of the oil tank 60 at its predetermined height position. The other end of the oil-uniformizing pipe 45 is branched into two oil-uniformizing pipes 45a and 45b, and they are connected to suction pipes 18a and 18b. A third temperature detection sensor T2 for detecting the temperature of the oil L flowing out from the oil tank 60 is mounted on one end of the second oil-uniformizing pipe 45. The oil-uniformizing pipes 45a and 45b are provided with second pressure reducing units, e.g., capillary tubes 46a and 46b.

A bypass pipe 47 is connected between the high-pressure-side pipe 6 and the oil tank 60. The bypass pipe 47 is provided with a third pressure reducing unit, e.g., a capillary tube 48. A third temperature sensor T3 is mounted on the capillary tube 48 of the bypass pipe 47 at a downstream position.

### (Condition of capillary tubes)

Resistances in the capillary tubes 46a and 46b of the oil-uniformizing pipes 45a and 45b are smaller than resistances in the capillary tubes 43a and 43b of the oil-uniformizing pipes 41a and 41b, and smaller than a resistance in the capillary tube 48 of the bypass pipe 47. Therefore, oil L in the oil tank 60 is prone to flow toward the oil-uniformizing pipes 45a and 45b.

### (Explanation of oil separator and oil returning pipes)

Oil returning pipes 71 and 72 are connected between the oil separator 7 and the oil-uniformizing pipe 45. One end of the oil returning pipe 71 is connected to a side surface of the oil separator 7 at a predetermined height position. The oil returning pipe 71 is provided with a capillary tube 73. Oil L in the oil separator 7 accumulated at a location higher than the connected position of the oil returning pipe 71 flows into the oil returning pipe 71, and flows into the oil-uniformizing pipe 45 through the capillary tube 73. The oil L flowing into the oil-uniformizing pipe 45 diverts into the oil-uniformizing pipes 45a and 45b and flows into the suction pipes 18a and 18b through the capillary tubes 46a and 46b, and the oil L is sucked into the compressors 4a and 4b together with refrigerant which is circulated through the refrigerating cycle.

One end of the oil returning pipe 72 is connected to a lower portion of the oil separator 7. The oil returning pipe 72 is provided with an open/close valve 74 and a capillary tube 75.

### (Explanation of refrigerant flow in the refrigerating cycle)

If the compressors 4a and 4b are operated, refrigerant discharged from the compressors 4a and 4b flows into the high-pressure-side pipe 6 through discharge pipes 5a and 5b, and the refrigerant is supplied to the oil separator 7 from the high-pressure-side pipe 6. The oil separator 7 separates refrigerant and oil L, and the refrigerant in the oil separator 7 flows toward the four-way valve 9.

The refrigerant which flowed into the four-way valve 9 flows into the outdoor heat exchanger 10 at the time of cooling operation, and the refrigerant heat-exchanges with outdoor air in the outdoor heat exchanger 10 and is condensed (liquefied). The refrigerant which passed through the outdoor heat exchanger 10 flows into indoor units 3 through a liquid tank 11, a packed valve 21a, a liquid-side pipe 12 and packed valves 21c in this order. The refrigerant which flowed into the indoor units 3 flows into the indoor heat exchanger 14 through the electronic expansion valve 13, and heat-exchanges with indoor air in the indoor heat exchanger 14 and is liquefied. The refrigerant which passed through the indoor heat exchanger 14 flows into the outdoor units 2a and 2b through the packed valves 21d, the gas-side pipe 15 and the packed valve 21b in this order. The refrigerant which flowed into the outdoor units 2a and 2b flows into the accumulator 16 through the four-way valve 9, and is sucked into the compressors 4a and 4b from the accumulator 16 through the low pressure side pipe 17 and the suction pipes 18a and 18b.

At the time of heating operation, the four-way valve 9 is switched and refrigerant flows in the opposite direction.

### (Flow of oil in oil-uniformizing circuit)

The oil levels in the hermetical cases of the compressors 4a and 4b are higher than the connection positions of the oil-uniformizing pipes 41a and 41b, oils L higher than the connection positions flow into the oil-uniformizing pipes 41a and 41b as excessive oil. The oils L flowing into the oil-uniformizing pipes 41a and 41b flow into the oil tank 60 through the capillary tubes 43a and 43b. A minute amount of high pressure refrigerant gas flows into the oil tank 60 from the high-pressure-side pipe 6 through the bypass pipe 47. Of the oil L which flowed into the oil tank 60, oil L located higher than the connection position of the oil-uniformizing pipe 45 flows into the oil-uniformizing pipe 45 as excessive oil. The oil L which flowed into the oil-uniformizing pipe 45 flows into the suction pipes 18a and 18b through the oil-uniformizing pipes 45a and 45b and the capillary tubes 46a and 46b, and is sucked into the compressors 4a and 4b together with refrigerant which is circulated through the refrigerating cycle.

The oil level in the hermetical case of the compressor 4a is higher than the connection position of the oil-uniformizing pipe 41a and the oil level in the hermetical case of the compressor 4b is lower than the connection position of the oil-uniformizing pipe 41b, and oil levels in the hermetical cases of the compressors 4a and 4b are different from each other in some cases. In this case, oil L flows into the oil-uniformizing pipe 41a of the compressor 4a side and high pressure refrigerant gas flows into the oil-uniformizing pipe 4b of the compressor 4b side, but these oil L and refrigerant gas congregate into the oil tank 60. The congregated oil L and refrigerant gas are brought into a mixture state, and the mixture flows into the oil-uniformizing pipe 45. The oil L and refrigerant in the mixture state which flowed into the oil-uniformizing pipe 45 equally divert into the oil-uniformizing pipes 45a and 45b by the resistances of the capillary tubes 46a and 46b.

The oil moves from the compressor 4a where the oil amount is high to the compressor 4b where the oil amount is small, and the oil levels in the hermetical cases of the compressors 4a and 4b are swiftly balanced.

As the refrigerant is discharged from the compressors 4a and 4b, a portion of oil L in the compressors 4a and 4b flows out into the discharge pipes 5a and 5b. Such oil L flows into the oil separator 7 from the high-pressure-side pipe 6. The oil separator 7 separates the oil L from the refrigerant and accommodates the oil L. Of the oil L accommodated in the oil separator 7, oil located higher than the connection position of the oil returning pipe 71 flows into the oil returning pipe 71. The oil L which flowed into the oil returning pipe 71 is returned to the compressors 4a and 4b through the oil-uniformizing pipe 45 and the oil-uniformizing pipes 45a and 45b.

If both the oil levels in the hermetical cases of the compressors 4a and 4b are lowered, the open/close valve 74 provided in the oil returning pipe 72 is opened, and the oil L in the oil separator 7 is returned into the compressors 4a and 4b through the oil-uniformizing pipe 45 and the oil-uniformizing pipes 45a and 45b.

### (Effect of oil tank 60)

If one of the compressors 4a and 4b is stopped, e.g., if the compressor 4a is stopped, oil L flowing into the oil-uniformizing pipe 41b from the operating compressor 4b tries to flow into the stopped compressor 4a through the oil tank 60 and the oil-uniformizing pipe 41a. However, this flow is prevented by the check valve 42a.

When the checking function of the check valve 42b is not sufficient and a minute amount of oil L can flow toward the compressor 4a side from the oil-uniformizing pipe 41a, the amount of oil L in the operating compressor 4b is gradually reduced, and the compressor 4b will be lacking in oil soon.

However, the oil tank 60 exists between the oil-uniformizing pipe 41b and the oil-uniformizing pipe 41a, refrigerant which is lighter in weight moves upward in the oil tank 60, the oil L which is heavy in weight moves downward. Thus, it is possible to prevent an inconvenient case in which oil L which flowed into the oil-uniformizing pipe 41b from the operating compressor 4b flows into the stopped compressor 4a through the oil tank 60 and the oil-uniformizing pipe 41a. Thus, it is possible to prevent oil L from moving from the operating compressor 4b to the stopped compressor 4a.

That is, since it is unnecessary to employ an expensive electronic valve for preventing the back flow, it is possible to avoid unnecessary cost increase.

Since the oil-uniformizing pipes 41a and 41b are collectively connected to the oil tank 60, even if the number of the compressors is large, many oil-uniformizing pipes are not incorporated in a complicated manner, and it is possible to prevent the structure from becoming complicated.

The pressure of the high pressure refrigerant discharged from the compressors 4a and 4b is applied to the oil tank 60 through the bypass pipe 47. Thus, it is possible to freely and easily design the location of the oil tank 60 and the distribution and supply of oil L from the oil tank 60 to the compressors 4a and 4b is reliably and swiftly completed.

Even if the compressor 4a produces trouble and back up operation is carried out by the compressor 4b, since it is possible to prevent oil L from moving from the operating compressor 4b toward the broken compressor 4a, the back up operation can be continued by the compressor 4b. The capability deterioration caused by the trouble of the compressor 4a can be backed up by the capability variable operation of the compressor 4b by the output of the inverter 52. Both the compressors 4a and 4b are of capability-variable-type by inverter driving. Thus, even if one of the compressors 4a and 4b produces trouble, the capability variable back up operation can be carried out.

Further, since a predetermined amount or more oil L can be accommodated in the oil tank 60, even if the amount of oil L flowing out from the compressors 4a and 4b is increased due to variation in operating state, oil L can swiftly be supplied to the compressors 4a and 4b without being late for the increase. The supply of oil L from the oil tank 60 oil separator faster than supply of oil L in the oil separator 7 through the oil returning pipe 71.

In each of the outdoor units 2a and 2b, a first open/close valve V1 is connected to the capillary tube 48 in the bypass pipe 47 in parallel. A third oil-uniformizing pipe 61 is connected from the bottom of the oil tank 60 to the low pressure side pipe 17, and the oil-uniformizing pipe 61 is provided with a second open/close valve V2 and a third open/close valve V3. A capillary tube 33 and a series circuit of a check valve 34 are connected to the second open/close valve V2 in the oil-uniformizing pipe 61 in parallel.

A balance pipe 31 is connected to a location between the open/close valve V2 and the open/close valve V3 in the oil-uniformizing pipes 61 of the outdoor units 2a and 2b through packed valves 21e and 21e.

When both the outdoor units 2a and 2b are operated, unbalance is generated in oil amount between the outdoor units 2a and 2b in some cases. For example, the amount of oil in the compressor of the outdoor unit 2a is increased and the amount of oil in the compressor of the outdoor unit 2b becomes insufficient in some cases.

### (Explanation of detection of oil amount)

If the amounts of oil of the compressors of the outdoor units 2a and 2b are appropriate, oil L flows into the oil-uniformizing pipes 41a and 41b, and the oil L flows into the oil tank 60. The oil L in the oil tank 60 flows into the oil-uniformizing pipe 45 and is supplied to a suction sides of the compressors 4a and 4b.

If the amounts of oil of the compressors of the outdoor units 2a and 2b become insufficient, not the oil L but the refrigerant flows into the oil-uniformizing pipes 41a and 41b, and the oil level in the oil tank 60 is lowered. Thus, refrigerant flows into the oil-uniformizing pipe 45 from the oil tank 60.

The temperature of the oil L or the refrigerant flowing into the oil-uniformizing pipes 41a and 41b is detected by the temperature sensors T1a and T1b, and the temperature of the oil L or refrigerant flowing into the oil-uniformizing pipe 45 is detected by the temperature detection sensor T2. The temperatures detected by the temperature sensors T1a, T1b and T2 when oil L passes are higher than the temperature when refrigerant passes. The temperature of refrigerant flowing into the bypass pipe 47 is detected by the temperature sensor T3.

The amounts of oil of the compressors of the outdoor units 2a and 2b are detected by the relation of detected temperatures of the temperature sensors T1a, T1b, T2 and T3.

### (Explanation of essential portion of control circuit)

FIG. 2 shows connections between the outdoor controllers 50 of the outdoor units 2a and 2b and an indoor controller 60 of the indoor units 3. Operation frequencies (output frequencies of the inverters 51 and 52) F of the compressors 4a and 4b of the outdoor units 2a and 2b are controlled in accordance with a total of required capabilities (air conditioning loads) of the indoor units 3.

### (Explanation of capability control)

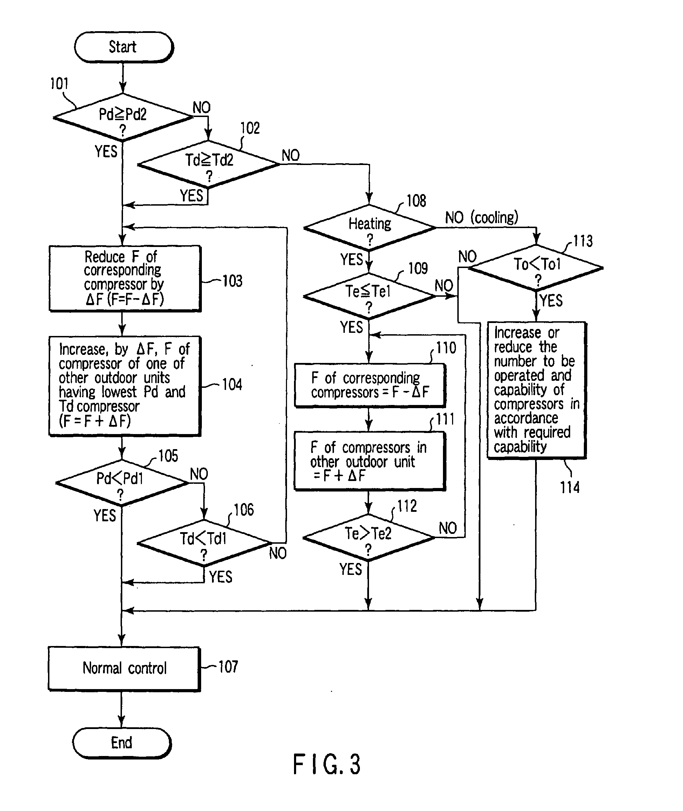

Next, the capability controls in the outdoor units 2a and 2b will be explained using a flowchart in FIG. 3.

For example, when the pressure of the discharged refrigerant of the compressor 4a in the outdoor unit 2a rises and a detected pressure (detected pressure Pd, hereinafter) of the pressure sensor Pd rises more than a predetermined value Pd2 (YES in step 101), or when the temperature of the discharged refrigerant of the compressor 4a of the outdoor unit 2a rises and the detected temperature (detected temperature Td, hereinafter) of the temperature sensor Td rises more than a predetermined value Td2 (YES in step 102), the operation frequency F of the compressor 4a is reduced by a predetermined value ΔF (step 103). With this reduction, the pressure (detected pressure Pd) rise and the temperature (detected temperature Td) rise of the discharged refrigerant of the compressor 4a of the outdoor unit 2a are suppressed.

Simultaneously with the reduction of the operation frequency F of the compressor 4a of the outdoor unit 2a, the operation frequency F of at least one of the compressors 4a and 4b of the other outdoor unit 2b is increased by the same predetermined value ΔF (step 104). With this increase, the capability reduction of the outdoor unit 2a side is compensated.

When the number of outdoor units is three or more, in one of the outdoor units except the outdoor unit 2a which has the lowest pressure (detected pressure Pd) and temperature (detected temperature Td) of the discharged refrigerant of the compressors 4a and 4b, the operation frequency F of at least one of the compressors is increased by the same predetermined value ΔF (step 104).

Then, when the detected pressure Pd is lowered to a predetermined value or more and less than Pd1 (< Pd2) (YES in step 105), or when a detected degree Td is reduced to a predetermined value or more and less than Td1 (< Td2) (YES in step 106), the control state is returned to the normal operation frequency control (step 107).

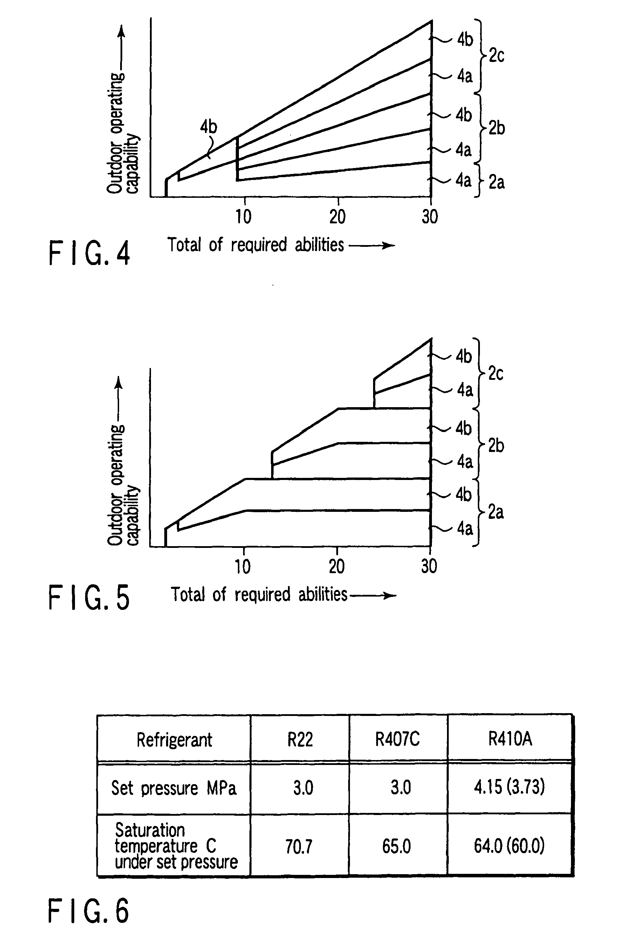

As shown in FIG. 4, in the normal operation frequency control, both the compressors 2a and 2b of the outdoor units are operated, and the capabilities of the compressors 2a and 2b are increased and decreased in accordance with a total of required capabilities (air conditioning loads) of the indoor units 3 and in a range where high pressure is not released. FIG. 4 shows an example in which three outdoor units 2a, 2b and 2c are provided.

By supplementary controlling the increase and decrease of the operation frequency F between the outdoor units as described above, the difference in capability when the number of compressors to be operated is increased or decreased is reduced, and the operation efficiency is enhanced. When a constant speed type (capability-fixed-type) compressor is used, a difference is generated in capability depending on whether the power supply frequency is 50 Hz or 60 Hz, but all of the compressors 4a and 4b are of capability-variable-type, the difference in capability caused by the power supply frequency can be overcome.

Further, since the increase and decrease of the operation frequency F between the outdoor units are supplementary controlled, even if the R410A refrigerant having high coefficient of performance is employed and the design pressure of the refrigerating cycle is lowered, i.e., even if the operation point of protecting control against the rise of high-pressure-side pressure is lowered, it is possible to avoid frequent stopping of the compressors 4a and 4b, and sufficient air conditioning capability can be obtained.

At the time of heating operation (YES in step 108), the temperature of the outdoor heat exchanger 10 (functioning as an evaporator) of the outdoor units 2a is detected by a temperature sensor Te. If this detected temperature (detected temperature Te, hereinafter) is reduced to equal to or lower than a set value Tel (YES in step 109), the operation frequencies F of the compressors 4a and 4b of the outdoor units 2a is reduced by the predetermined value ΔF (step 110). With this reduction, freeze-up (frost) of the outdoor heat exchanger 10 is prevented. Since the freeze-up is prevented, efficient continuous operation having no interruption can be carried out, and the heating efficiency is also enhanced.

Simultaneously with the reduction in operation frequency F, operation frequencies F of the compressors 4a and 4b of other outdoor unit are increased by the same predetermined value ΔF (step 111). With this increase, the reduction of capability of the outdoor unit 2a side is compensated.

When the number of outdoor units is three or more, in one of the outdoor units except the outdoor unit 2a which has the lowest pressure (detected pressure Pd) and temperature (detected temperature Td) of the discharged refrigerant of the compressors 4a and 4b, the operation frequencies F of the compressors 4a and 4b are increased by the same predetermined value ΔF (step 111).

Then, when the detected temperature Te becomes higher than a set value Te2 (> Pd1) (YES in step 105), the control state is returned to the normal operation frequency control (step 107).

As shown in FIG. 4, in the normal operation frequency control, both the compressors 2a and 2b of the outdoor units are operated, and the capabilities of the compressors 2a and 2b are increased or reduced in accordance with a total of required capabilities (air conditioning loads) of the indoor units 3 and in a range where high pressure is not released.

If the cooling operation is carried out when the outside air temperature is low, the condensation capability of the outdoor heat exchanger 10 of each outdoor unit is increased and thus, the condensation pressure of the refrigerant in each outdoor heat exchanger 10 is lowered and the temperature of each outdoor heat exchanger 10 is excessively lowered. In such a case, evaporation pressure of the refrigerant in the indoor heat exchanger 14 of each indoor unit 3 is also lowered, the temperature of each indoor heat exchanger 14 becomes lower than 0°C, the freeze-up preventing protection is immediately operated and the continuous operation is interrupted. If the outside air temperature is lowered and the condensation capability of the outdoor heat exchanger 10 of each outdoor unit is increased, the refrigerant pressure of the refrigerating cycle is out of the operation-possible range of each compressor, and there is fear that the durability of the compressors is adversely affected.

Hence, if the detected temperature To of the outside air temperature sensor 53 is reduced to a value smaller than a predetermined set value Tol (YES in step 113) at the time of cooling operation (NO in step 108), the number of compressors 2a and 2b to be operated and their capabilities of each outdoor unit are increased or decreased in accordance with a total of required capabilities of each indoor unit 3 (step 114) as shown in FIG. 5. That is, when a total of the required capabilities of the indoor unit 3s is small, the condensation capability of the outdoor heat exchanger 10 of each outdoor unit is reduced by reducing the number of compressors 2a and 2b to be operated and their capabilities of each outdoor unit.

By reducing the condensation capability of the outdoor heat exchanger 10 of each outdoor unit, it is possible to prevent the evaporating pressure of the refrigerant in the indoor heat exchanger 14 of each indoor unit 3, and to overcome the inconvenient case in which the temperature of each indoor heat exchanger 14 becomes lower than 0°C. Since the condensation capability of the outdoor heat exchanger 10 of each outdoor unit is reduced, the durability of the compressors 2a and 2b of each outdoor unit is not degraded.

FIG. 5 shows an example in which three outdoor units 2a, 2b and 2c are provided.

FIG. 6 shows design pressures and saturation temperatures of R22 refrigerant, R407 refrigerant and R410 refrigerant by reference.

### Industrial Applicability

The present invention can be utilized for an air conditioner having a plurality of outdoor units.

## Claims

1. An air conditioner comprising a plurality of outdoor units (2a) and a plurality of indoor units (3), and forming a refrigerating cycle (1) in which the outdoor units are connected to one another in parallel, wherein:
a refrigerant of the refrigerating cycle is R410A refrigerant; and
a compressor (4a) provided in each of the outdoor units is a variable-frequency-type compressor by inverter driving;
the air conditioner further comprising:
a controller (50) configured to operate the compressors together and to control increases and decreases of the operation frequency of each of the compressors in accordance with the air conditioning load of the air conditioner.

2. An air conditioner according to claim 1, further comprising an outdoor air temperature sensor (53) configured to detect outdoor air temperature.

3. An air conditioner according to claim 2, wherein, when the detected temperature of the outdoor air temperature sensor becomes low at the time of a cooling operation, the controller increases and decreases the number of the compressors to be operated and the operation frequencies of the compressors in accordance with the air conditioning load.

4. An air conditioner according to claim 1, wherein, when the pressure or temperature of a discharged refrigerant of the compressor in any one of the outdoor units (2a) rises by a predetermined value or more, the controller is configured to reduce the operation frequency until the pressure or temperature of the discharged refrigerant of that compressor is lowered to less than a predetermined value, and to increase, by the reduced amount, the operation frequency of one of the compressors of the remaining one of the outdoor units having the lowest pressure or temperature of the discharged refrigerant.

5. An air conditioner according to any of claims 1 to 3, comprising a plurality of compressors provided in each of the outdoor units (2a) each being a variable-frequency-type compressor by inverter driving.

6. An air conditioner according to claim 5, wherein, when the pressure or temperature of a discharged refrigerant of at least one of the compressors in any one of the outdoor units (2a) rises by a predetermined value or more, the controller is configured to reduce the operation frequency until the pressure or temperature of the discharged refrigerant of that compressor is lowered to less than a predetermined value, and to increase, by the reduced amount, the operation frequency of at least one of the compressors of the remaining one of the outdoor units having the lowest pressure or temperature of the discharged refrigerant

7. An air conditioner according to claim 1, comprising a plurality of compressors provided in each of the outdoor units (2a) each being a variable-frequency-type compressor by inverter driving, wherein the controller is configured to operate the compressors together and to control increases and decreases of the operation frequency of each of the compressors in accordance with the total of the required capabilities of the indoor units.

8. An air conditioner according to claim 7, further comprising an outdoor air temperature sensor (53) configured to detect outdoor air temperature.

9. An air conditioner according to claim 8, wherein, when the detected temperature of the outdoor air temperature sensor (53) becomes low at the time of a cooling operation, the controller is configured to increase and decrease the number of the compressors to be operated and the operation frequencies of the compressors in accordance with the required capability of each of the indoor units.

10. An air conditioner according to claim 7, wherein, when the pressure or temperature of a discharged refrigerant of at least one of the compressors in any one of the outdoor units rises by a predetermined value or more, the controller is configured to reduce its operation frequency until the pressure or temperature of the discharged refrigerant of that compressor is lowered to less than a predetermined value, and to increase, by the reduced amount, the operation frequency of at least one of the compressors of the remaining one of the outdoor units having the lowest pressure or temperature of the discharged refrigerant.

## Patentansprüche

1. Klimaanlage, die eine Vielzahl von Außenlufteinheiten (2a) und eine Vielzahl von Raumlufteinheiten (3) umfasst und einen Kühlzyklus (1) bildet, in dem die Außenlufteinheiten parallel miteinander verbunden sind, worin:
ein Kühlmittel des Kühlzyklus das Kühlmittel R410A ist; und
ein in jeder der Außenlufteinheiten bereitgestellter Kompressor (4a) ein Kompressor der Bauart mit variabler Frequenz durch Wechselrichteransteuerung ist;
wobei die Klimaanlage ferner umfasst:
eine Steuerungseinrichtung (50), die dafür konfiguriert ist, die Kompressoren gemeinsam zu betreiben und Erhöhungen und Absenkungen der Betriebsfrequenz jedes der Kompressoren gemäß der Klimatisierungslast der Klimaanlage zu steuern.

2. Klimaanlage nach Anspruch 1, die ferner einen Außenlufttemperatursensor (53) umfasst, der dafür konfiguriert ist, die Außenlufttemperatur zu ermitteln.

3. Klimaanlage nach Anspruch 2, worin, wenn die ermittelte Temperatur des Außenlufttemperatursensors zur Zeit eines Kühlvorgangs niedrig wird, die Steuerungseinrichtung die Anzahl der zu betreibenden Kompressoren und die Betriebsfrequenzen der Kompressoren gemäß der Klimatisierungslast erhöht und verringert.

4. Klimaanlage nach Anspruch 1, worin, wenn der Druck oder die Temperatur eines entspannten Kühlmittels des Kompressors in einer der Außenlufteinheiten (2a) um einen vorbestimmten Wert oder mehr ansteigt, die Steuerungseinrichtung dafür konfiguriert ist, die Betriebsfrequenz zu verringern, bis der Druck oder die Temperatur des entspannten Kühlmittels dieses Kompressor auf weniger als einen vorbestimmten Wert gesenkt wird, und die Betriebsfrequenz eines der Kompressoren derjenigen der übrigen Außenlufteinheiten, die den niedrigsten Druck oder die niedrigste Temperatur des entspannten Kühlmittels hat, um den verringerten Betrag zu erhöhen.

5. Klimaanlage nach einem der Ansprüche 1 bis 3, die eine Vielzahl von Kompressoren umfasst, die in jeder der Außenlufteinheiten (2a) bereitgestellt sind, wobei jeder ein Kompressor der Bauart mit variabler Frequenz durch Wechselrichteransteuerung ist.

6. Klimaanlage nach Anspruch 5, worin, wenn der Druck oder die Temperatur eines entspannten Kühlmittels mindestens eines der Kompressoren in einer der Außenlufteinheiten (2a) um einen vorbestimmten Wert oder mehr ansteigt, die Steuerungseinrichtung dafür konfiguriert ist, die Betriebsfrequenz zu verringern, bis der Druck oder die Temperatur des entspannten Kühlmittels dieses Kompressors auf weniger als einen vorbestimmten Wert gesenkt wird, und die Betriebsfrequenz mindestens eines der Kompressoren derjenigen der übrigen Außenlufteinheiten, die den niedrigsten Druck oder die niedrigste Temperatur des entspannten Kühlmittels hat, um den verringerten Betrag zu erhöhen.

7. Klimaanlage nach Anspruch 1, die eine Vielzahl von Kompressoren umfasst, die in jeder der Außenlufteinheiten (2a) bereitgestellt sind, wobei jeder ein Kompressor der Bauart mit variabler Frequenz durch Wechselrichteransteuerung ist, worin die Steuerungseinrichtung dafür konfiguriert ist, die Kompressoren gemeinsam zu betreiben und Erhöhungen und Absenkungen der Betriebsfrequenz jedes der Kompressoren gemäß der erforderlichen Gesamtleistungsfähigkeit der Raumlufteinheiten zu steuern.

8. Klimaanlage nach Anspruch 7, die ferner einen Außenlufttemperatursensor (53) umfasst, der dafür konfiguriert ist, die Außenlufttemperatur zu ermitteln.

9. Klimaanlage nach Anspruch 8, worin, wenn die ermittelte Temperatur des Außenlufttemperatursensors (53) zur Zeit eines Kühlvorgangs niedrig wird, die Steuerungseinrichtung dafür konfiguriert ist, die Anzahl der zu betreibenden Kompressoren und die Betriebsfrequenzen der Kompressoren gemäß der erforderlichen Leistungsfähigkeit jeder der Raumlufteinheiten zu erhöhen und zu verringern.

10. Klimaanlage nach Anspruch 7, worin, wenn der Druck oder die Temperatur eines entspannten Kühlmittels mindestens eines der Kompressoren in einer der Außenlufteinheiten um einen vorbestimmten Wert oder mehr ansteigt, die Steuerungseinrichtung dafür konfiguriert ist, die Betriebsfrequenz zu verringern, bis der Druck oder die Temperatur des entspannten Kühlmittels dieses Kompressors auf weniger als einen vorbestimmten Wert gesenkt wird, und die Betriebsfrequenz mindestens eines der Kompressoren derjenigen der übrigen Außenlufteinheiten, die den niedrigsten Druck oder die niedrigste Temperatur des entspannten Kühlmittels hat, um den verringerten Betrag zu erhöhen.

## Revendications

1. Climatiseur comprenant une pluralité d'unités extérieures (2a) et une pluralité d'unités intérieures (3), et formant un cycle de réfrigération (1) dans lequel les unités extérieures sont connectées les unes aux autres en parallèle, dans lequel :
un fluide frigorigène du cycle de réfrigération est le fluide frigorigène R410A ; et
un compresseur (4a) prévu dans chacune des unités extérieures est un compresseur du type à fréquence variable à commande par onduleur ;
le climatiseur comprenant en outre :
un contrôleur (50) configuré pour opérer les compresseurs en même temps et pour commander les augmentations et les diminutions de la fréquence de fonctionnement de chacun des compresseurs en fonction de la charge de climatisation du climatiseur.

2. Climatiseur selon la revendication 1, comprenant en outre un capteur de température d'air extérieur (53) configuré pour détecter la température de l'air extérieur.

3. Climatiseur selon la revendication 2, dans lequel, lorsque la température détectée du capteur de température d'air extérieur devient faible à l'instant d'une opération de refroidissement, le contrôleur augmente et diminue le nombre des compresseurs à opérer et les fréquences de fonctionnement des compresseurs en fonction de la charge de climatisation.

4. Climatiseur selon la revendication 1, dans lequel, lorsque la pression ou la température d'un fluide frigorigène déchargé du compresseur dans l'une quelconque des unités extérieures (2a) s'élève d'une valeur prédéterminée ou plus, le contrôleur est configuré pour réduire la fréquence de fonctionnement jusqu'à ce que la pression ou la température du fluide frigorigène déchargé de ce compresseur soit abaissée à une valeur inférieure à une valeur prédéterminée, et pour augmenter, de la quantité réduite, la fréquence de fonctionnement de l'un des compresseurs de l'unité restante parmi les unités extérieures qui a la pression ou la température la plus faible du fluide frigorigène déchargé.

5. Climatiseur selon l'une quelconque des revendications 1 à 3, comprenant une pluralité de compresseurs prévus dans chacune des unités extérieures (2a), chacun étant un compresseur du type à fréquence variable à commande par onduleur.

6. Climatiseur selon la revendication 5, dans lequel, lorsque la pression ou la température d'un fluide frigorigène déchargé d'au moins l'un des compresseurs dans l'une quelconque des unités extérieures (2a) s'élève d'une valeur prédéterminée ou plus, le contrôleur est configuré pour réduire la fréquence de fonctionnement jusqu'à ce que la pression ou la température du fluide frigorigène déchargé de ce compresseur soit abaissée à une valeur inférieure à une valeur prédéterminée, et pour augmenter, de la quantité réduite, la fréquence de fonctionnement d'au moins l'un des compresseurs de l'unité restante parmi les unités extérieures qui a la pression ou la température la plus faible du fluide frigorigène déchargé.

7. Climatiseur selon la revendication 1, comprenant une pluralité de compresseurs prévus dans chacune des unités extérieures (2a), chacun étant un compresseur du type à fréquence variable à commande par onduleur, dans lequel le contrôleur est configuré pour opérer les compresseurs en même temps et pour commander les augmentations et les diminutions de la fréquence de fonctionnement de chacun des compresseurs en fonction du total des capacités requises des unités intérieures.

8. Climatiseur selon la revendication 7, comprenant en outre un capteur de température d'air extérieur (53) configuré pour détecter la température de l'air extérieur.

9. Climatiseur selon la revendication 8, dans lequel, lorsque la température détectée du capteur de température d'air extérieur (53) devient faible à l'instant d'une opération de refroidissement, le contrôleur est configuré pour augmenter et diminuer le nombre des compresseurs à opérer et les fréquences de fonctionnement des compresseurs en fonction de la capacité requise de chacune des unités intérieures.

10. Climatiseur selon la revendication 7, dans lequel, lorsque la pression ou la température d'un fluide frigorigène déchargé d'au moins l'un des compresseurs dans l'une quelconque des unités extérieures s'élève d'une valeur prédéterminée ou plus, le contrôleur est configuré pour réduire sa fréquence de fonctionnement jusqu'à ce que la pression ou la température du fluide frigorigène déchargé de ce compresseur soit abaissée à une valeur inférieure à une valeur prédéterminée, et pour augmenter, de la quantité réduite, la fréquence de fonctionnement d'au moins l'un des compresseurs de l'unité restante parmi les unités extérieures qui a la pression ou la température la plus faible du fluide frigorigène déchargé.
